# EUROPÄISCHE PATENTSCHRIFT

(11) **EP 1 586 612 B1**
(45) Veröffentlichungstag und Bekanntmachung des Hinweises auf die Patenterteilung: **18.06.2008**
(21) Anmeldenummer: 05008308.8
(22) Anmeldetag: 15.04.2005
(51) Int. Cl.: C09D 11/00

(54) **Wässrige Ink Jet-Tinte**
Aqueous ink for ink jets
Encre aqueuse par jet d' encre

(30) Priorität: 15.04.2004 DE 102004018337
(43) Veröffentlichungstag der Anmeldung: 19.10.2005
(73) Patentinhaber: Pelikan Hardcopy Production AG, 8132 Egg (CH)
(72) Erfinder: Rahimi, Migjen, 8610 Uster (CH)
(74) Vertreter: Hagemann, Heinrich

(56) Entgegenhaltungen:
- EP-A- 0 562 732
- EP-A- 0 619 349
- EP-A- 0 690 107
- EP-A- 1 010 735
- US-A- 5 626 655
- US-A- 6 004 389
- US-A- 6 153 001
- US-A1- 2003 008 080
- US-A1- 2003 196 569
- PATENT ABSTRACTS OF JAPAN Bd. 2003, Nr. 12, 5. Dezember 2003 (2003-12-05) & JP 2003 253599 A (NISSHIN CHEM IND CO LTD), 10. September 2003 (2003-09-10)

## Beschreibung

Die Erfindung betrifft eine Ink Jet-Tinte, die einen gelben Farbstoff, einen Magenta-Farbstoff oder einen Cyan-Farbstoff enthält, wobei die Tinte des Weiteren ein organisches Lösungsmittel, Tenside, Feuchthaltemittel sowie gegebenenfalls übliche Additive enthält.

Der Tintenstrahldruck oder auch Ink Jet-Druck ist ein berührungsloses, direktes Sofort-Druckverfahren ohne materielle Druckform, das auf thermischen oder elektrophysikalischen Prinzipien beruht. Die zu druckende Information wird in Form einzelner Tintentropfen auf ein Druckmedium, in der Regel Papier, übertragen. Beim Continuous Jet-Verfahren erfolgt die Tropfenerzeugung aus einem kontinuierlichen Tintenstrahl, der mit statischem Überdruck aus einer Düse austritt. Angeregt, beispielsweise mittels eines Piezowandlers, zerfällt der Tintenstrahl sodann in Tropfen definierter Größe, die je nach Tintenart unter Einwirkung eines magnetischen oder elektrostatischen Feldes in der gewünschten Weise auf dem Druckmedium platziert werden. Nicht benötigte Tropfen werden unter Feldeinwirkung in eine Tintenrückführeinrichtung abgelenkt. Beim Drop on Demand-Verfahren erfolgt die Tropfenerzeugung demgegenüber "auf Bedarf", d.h. durch gezielte elektrische Impulsansteuerung, eines Tropfengenerators, der dadurch die Abgabe eines Tintentropfens aus einer Düse bewirkt. Als Tropfengeneratoren dienen in der Regel Piezowandler, elektromagnetische oder elektrostriktive Wandler.

Eine besondere Stellung nimmt das sogenannte Bubble Jet-Verfahren ein. Die Tropfenerzeugung erfolgt hierbei thermisch durch kurzzeitiges Überhitzen eines in der Tinte angeordneten Heizelementes. Die dabei entstehende Dampfblase verdrängt impulsartig die Tinte über dem Heizelement und führt dadurch zum Austritt eines Tropfens aus der zugeordneten Düse, der wiederum auf dem Druckmedium platziert wird.

Gegenüber den vorgenannten Verfahren entfallen beim Bubble Jet-Verfahren mechanisch bewegte Komponenten. Da Druckköpfe mit elektrothermischen Wandlern damit in der Regel kleiner und billiger hergestellt werden können als solche mit elektromechanischen Wandlerelementen, haben Bubble Jet-Drucker heute eine weite Verbreitung im Markt gefunden.

Die im Ink Jet-Druck verwendeten Farben sind regelmäßig dünnflüssige Tinten auf Wasser- und/oder Lösungsmittel-Basis mit einer Viskosität von etwa 1 bis 30 mPa.s. Sie enthalten neben der besonders beim Bubble Jet-Druck für die Dampfbildung wesentlichen Komponente Wasser regelmäßig ein Gemisch aus verschiedenen organischen Lösungsmitteln (zum Teil bis zu acht Komponenten zur Steuerung der Trocknungszeit), und zwar insbesondere Ketone (vorwiegend Methylethylketon), Acetate, Glycolether, Pyrrolidone, Glykole, Glycerin und Alkohole (z.B. Ethanol). Der Lösungsmittelanteil beträgt im allgemeinen bei der Drop on Demand-Technologie etwa 15 bis 60 Gew.-%. Beim Continuous Ink Jet-Verfahren kann der Lösungsmittelanteil bis zu 98 Gew.-% betragen. Die Farbmittel, die regelmäßig eine Menge von etwa 2 bis 6 Gew.-% der Ink Jet-Tinte ausmachen, sind vorwiegend lösliche Farbstoffe mit hoher Lichtechtheit und Thermostabilität, zum Teil aber auch unlösliche Pigmente einer Teilchengröße unter etwa 3 µm, insbesondere unter 1 µm.

Ist es erforderlich, eine elektrische Leitfähigkeit einzustellen, dann wird regelmäßig ein leitfähiges Salz zur Erzielung einer elektrischen Leitfähigkeit von möglichst mehr als 10⁴ Ω⁻¹ cm⁻¹ herangezogen. Im Ruhezustand soll die Tinte in den Düsen über längere Zeit weder eintrocknen noch verkrusten. Im allgemeinen werden den Ink Jet-Tinten zur Einstellung einer ausreichenden Konservierung Biozide zugesetzt, damit sie beispielsweise nicht von Bakterien oder Schimmel befallen werden können. Die Ink Jet-Tinten müssen mit den Materialien des Tintenbehälters, der Tintenzuleitung und des Schreibkopfes verträglich sein; sie dürfen nicht korrosiv sein und enthalten daher zum Beispiel Korrosionsinhibitoren. Weitere wichtige Parameter der Tinten für das Ink Jet-Verfahren sind die Viskosität, die Oberflächenspannung und der pH-Wert. Je nach System müssen die angesprochenen physikalischen Werte der Ink Jet-Tinte den Anforderungen des Einzelfalles angepasst werden.

Es hat sich gezeigt, dass die bekannten Tinten die vorstehend angesprochenen Anforderungen nicht wünschenswert erfüllen, wenn sie in Tintenbehältern bzw. in Patronen zum Einsatz kommen. So ist es erstrebenswert, die Stabilität der Ink Jet-Tinte in dem Tintenbehälter bzw. der Patrone zu erhöhen und den Fluss der Ink Jet-Tinten aus den refillten Tintenbehältern bzw. Patronen unter Verhinderung von Streifenbildung zu verbessern. Darüber hinaus soll die Kompatibilität der Tinte mit der Resttinte des Tintenbehälters bzw. der Patrone verbessert werden.

Zwar gibt es Vorschläge, hier eine Verbesserung dadurch zu erreichen, indem der Anteil der Tenside in den Ink Jet-Tinten so weit angehoben wird, bis diese aus den Patronen gut ausgeschrieben werden können. Ein zu hoher Anteil an Tensiden hat den Nachteil, dass im Allgemeinen eine unerwünscht hohe Schaumbildung auftritt. Zudem bilden sich sogenannte "Fischaugen", was ausweist, dass störende unlösliche Anteile vorliegen. Insbesondere werden die Probleme nicht behoben, wenn sich in der Patrone bzw. dem Tintenbehälter ein Schwamm befindet, der Blasen auftreten lassen kann, die zu einem verschlechterten Ausdruck führen.

Der Erfindung lag daher die Aufgabe zugrunde, die oben angesprochenen Probleme im Hinblick auf den wünschenswerten Fluss der Tinten aus refillten Tintenbehältern bzw. Patronen sowie die Stabilität der Tinte in der Patrone bzw. dem Tintenbehälter zu verbessern und insbesondere die Kompatibilität der jeweiligen Tinte, wenn sie nachgefüllt wird, mit der Resttinte zu erhöhen.

Erfindungsgemäß wird diese Aufgabe durch eine wässrige Ink Jet-Tinte gelöst, die einen gelben Farbstoff, einen Magenta-Farbstoff oder einen Cyan-Farbstoff enthält, wobei die Ink Jet-Tinte des Weiteren ein organisches Lösungsmittel und Tenside sowie gegebenenfalls übliche Additive enthält, dadurch gekennzeichnet, daß die Ink Jet-Tinte mindestens zwei Tenside unterschiedlichen HLB-Wertes, wobei mindestens ein Tensid A einen HLB-Wert von mehr als etwa 15 und mindestens ein Tensid B eines HLB-Wertes von etwa 1 bis 14 aufweist, sowie ein Feuchthaltemittel enthält.

Der Begriff des HLB-Wertes ist dem Fachmann bekannt. Er stellt ein Maß für die Wasser- bzw. Öl-Löslichkeit von vorwiegend nichtionischen Tensiden und Emulgatoren dar (von engl.: hydrophilic-lipophilic-balance). Der HLB-Wert lässt sich beispielsweise (gaschromatographisch) durch Bestimmung der Dielektrizitätskonstanten oder kolorimetrisch ermitteln. Der HLB-Wert eines Tensid- oder Emulgator-Gemisches lässt sich aus den Werten seiner Bestandteile additiv berechnen. Der HLB-Wert von Netzmitteln liegt im allgemeinen zwischen 7,0 und 9,0, von O/W-Emulsionen zwischen 8,0 und 18,0, von Tensiden zwischen 13,0 und 15,0 und von Lösungsvermittlern zwischen 12,0 und 18,0 (vgl. Römpp Chemielexikon, 9. Aufl., Bd. 3, S. 1812, r.Sp., bis S. 1813, I.Sp.). Kern der Erfindung ist es, dass die erfindungsgemäße Ink Jet-Tinte mindestens zwei Tenside enthält, nämlich mindestens ein Tensid A eines HLB-Wertes von mehr als etwa 15 und mindestens ein Tensid B eines HLB-Wertes von etwa 1 bis 14.

Das Tensid A mit einem HLB-Wert von mehr als etwa 15 erfüllt im Wesentlichen die Funktion, dass die Oberflächenspannung im wünschenswerten Umfange gesenkt und bei der Einbindung eines Schwamms in die Patrone bzw. den Tintenbehälter dieser gesättigt. Hierdurch wird verhindert, dass das weitere Tensid B in unerwünscht hohem Anteil in dem Schwamm adsorbiert wird. Das Tensid B mit einem HLB-Wert von etwa 1 bis 14 sorgt dafür, dass die Ink Jet-Tinte gemäß der Erfindung bei der Anwendung reibungslos aus dem Schwamm bzw. den Ink Jet-Düsen herausfließt. Andernfalls würden unerwünschte Streifen auf dem Druckbild auftreten. Dieses Phänomen wird durch das eingebundene Tensid A weitergehend zurückgedrängt.

Obige vorteilhafte Ergebnisse werden insbesondere dann erreicht, wenn der HLB-Wert des Tensids A mehr als etwa 17 beträgt, insbesondere zwischen etwa 15 und 25 liegt, während der HLB-Wert des Tensids B vorzugsweise zwischen etwa 4 und 13 liegt.

Das Tensid A des bezeichneten HLB-Wertes bzw. -Bereichs liegt vorzugsweise in Form eines Polyalkylenoxid-modifizierten Polydimethylsiloxans vor. Ein besonders vorteilhaftes Polydimethylsiloxan dieser Art ist linear und weist die folgende allgemeine Formel (I) auf: 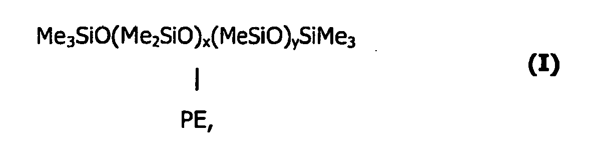 mit der Bedeutung von PE = -CH₂CH₂CH₂O(EO)ₘ(PO)ₙZ, worin EO eine Ethylenoxy-Gruppe, PO eine 1,2-Propylenoxy-Gruppe und Z entweder Wasserstoff oder einen niedrigen Alkylrest, insbesondere einen Alkylrest von 1 bis 10 Kohlenstoffatomen, ganz besonders von 1 bis 4 Kohlenstoffatomen aufweist. Zu den bevorzugten Alkylresten zählen insbesondere der Methyl-, Ethyl-, Propyl-, Butly- und Pentylrest sowie deren Isomeren.

Gleichermaßen vorteilhaft ist es, wenn man das bezeichnete Polyalkylenoxid-modifizierte Polydimethylsiloxan in einer Weise ausbildet, dass es verzweigt ist und die folgende allgemeine Formel (II) aufweist:

(MeSi)_{y-2}[(OSiMe₂)_{x/y}O-PE]_{y(} **(II)**

mit der Bedeutung von PE = -(EO)ₘ(PO)ₙR, worin die verschiedenen Substituenten die im Zusammenhang mit der vorstehenden Formel (I) angegebene Bedeutung haben und R einen niederen Alkylrest mit 1 bis 10 Kohlenstoffatomen, insbesondere 1 bis 4 Kohlenstoffatomen, wobei die obigen Ausführungen zu dem bevorzugten konkreten Alkylrest auch hier gelten. Es ist der Patentanmelderin bewusst, dass die obigen Formeln (I) und (II) unbestimmte Größen in Form von beispielsweise m, n sowie x und y aufweisen. Hierbei soll es sich um eine Formel handeln, die dem Fachmann eine Richtlinie angibt, wie er die geeigneten Materialien ermitteln kann, indem er beispielsweise anhand einfacher Versuche unter Einsatz der aus seiner Sicht wahrscheinlichen Parameter das jeweilige vorteilhafte Polydimethylsiloxan ermitteln kann.

Auch bei der Wahl des Tensids B unterliegt die Erfindung keiner wesentlichen Einschränkung, sofern der HLB-Wert zwischen etwa 1 und 14 liegt. Von besonderem Vorteil ist es, wenn das Tensid B in Form eines Ethylenglykol-Tensids der folgenden allgemeinen Formel (III) vorliegt: 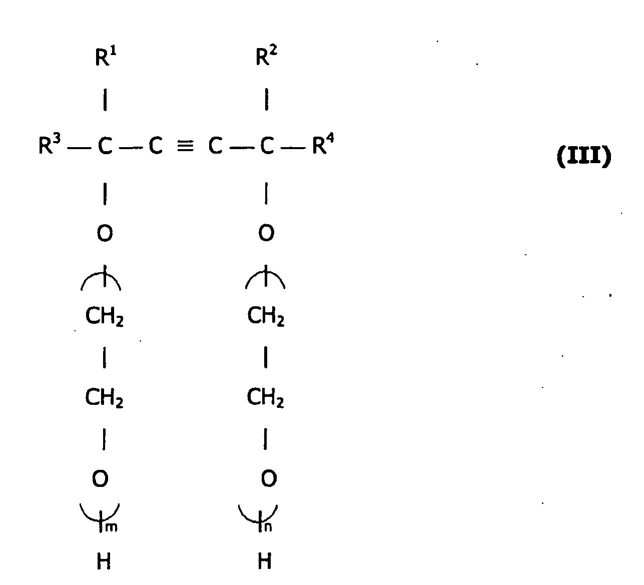 worin R¹, R², R³ und R⁴, jeweils unabhängig voneinander, einen niederen Alkylrest darstellen und die Summe von n + m zwischen 0 und 30, insbesondere zwischen 5 und 15 liegt. Bei der Verwendung eines derartigen Tensids B ist es besonders bevorzugt, wenn der angesprochene Alkylrest 1 bis 10 Kohlenstoffatome, insbesondere 1 bis 4 Kohlenstoffe enthält.

Durch eine besonders optimale Abstimmung der einzelnen Parameter der erfindungsgemäßen Ink Jet-Tinte lässt sich die dynamische Oberflächenspannung vorteilhaft steuern. Die Optimierung der dynamischen Oberflächenspannung führt dazu, was bereits angesprochen worden ist, dass ein optimaler Ausfluss der Ink Jet-Tinte aus Schwamm und/oder Düsen der Patrone erfolgt und zudem im Druckbild keine Streifen auftreten.

Dieser technische Erfolg wird insbesondere dann erreicht, wenn die Ink Jet-Tinte bei einer Temperatur von 20°C eine dynamische Oberflächenspannung (gemessen mit der Methode des maximalen Blasendrucks) von weniger als etwa 35 mN/m, insbesondere von etwa 20 bis 30 mN/m aufweist. Ein im Handel erhältliches Erzeugnis, das unter die oben bezeichnete Formel des Tensids A fällt, führt dazu, dass die Oberflächenspannung der Ink Jet-Tinte bis auf 25 mN/m gesenkt wird, wobei das Tensid A in der Patrone während etwa vier Wochen bei Raumtemperatur (RC) von einem eingebundenen Schwamm aus insbesondere Polyurethan, Polyester und/oder einem Melaminharz weitgehend und in Einzelfällen vollständig (100%) aufgenommen wird, wodurch die Oberflächenspannung bis auf 30 mN/m steigt. Die Aufnahme des Tensids A durch den Schwamm bewirkt, dass dieser "weicher" wird. Mit anderen Worten wird der Schwamm durch das Tensid A mehr oder weniger gesättigt und verhindert oder verlangsamt die Aufnahme anderer Tenside. Dadurch wird ein konstanter und stabiler Fluss der Tinten durch den Schwamm ermöglicht. Entfernt man dieses Tensid A aus der Ink Jet-Tinte bzw. bindet es nicht ein, dann treten bei Einverleibung anderer Tenside B mit höherem HLB-Wert Streifen auf. Würde man die Konzentration an Tensid A zu stark erhöhen, um den Schwamm mit Tensiden zu sättigen, dann könnte zwar die Streifenbildung reduziert werden, was jedoch dann den Nachteil zeigt, dass ein übermäßiges Schäumen der Tinte auftritt.

Die Mehrzahl der Tenside A hat zwar den Nachteil, dass sie in wässriger Lösung schäumen, nämlich bei der Produktion der Ink Jet-Tinte sowie beim Refillen von Patronen bzw. Tintenbehälter. Deshalb ist es, wie es die Erfindung zum Ausdruck bringt, erforderlich, weitere Tenside B mit einem HLB-Wert von etwa 1 bis 14 einzusetzen, die dafür sorgen, dass kein Schaum auftritt bzw. sie in diesem Falle als Entschäumungsmittel wirken.

Der Einsatz des Tensids A und des B unterliegt bezüglich der Menge keiner kritischen Beschränkung. Es ist bevorzugt, wenn das Tensid A in einer Konzentration von etwa 0,01 bis 1 Gew.-%, insbesondere etwa 0,05 bis 0,7 Gew.-%, und das Tensid B in einer Konzentration von etwa 0,01 bis 1 Gew.-%, insbesondere von etwa 0,1 bis 0,7 Gew.-%, vorliegt.

Auch bezüglich des Gehalts an organischen Lösungsmitteln unterliegt die vorliegende Erfindung keiner wesentlichen Beschränkung. Es handelt sich um die üblichen Lösungsmittel. Hierbei seien als bevorzugte Beispiele angeführt Diethylenglykol, Triethylenglykol, Butyldiglykol, Glycerin, 2-Pyrrolidon, primäre, sekundäre und tertiäre Alkohole, wie insbesondere 1,5-Pentandiol, Propanol, Butanol etc..

Erfindungsgemäß ist es erforderlich, der beanspruchten Ink Jet-Tinte Feuchthaltemittel einzuverleiben. Feuchthaltemittel sind dem Stand der Technik entnehmbar. Dennoch soll hier folgendes ausgeführt werden: Besonders geeignet sind Glykole, wie Diethylenglykol, Triethylenglykol und Butyldiglykol, Glycerin sowie Harnstoff und/oder Harnstoffderviate. Ein besonders günstiges Feuchthaltemittel ist auch 1,1,1-Trishydroxymethylpropan. Ein Teil der Feuchthaltemittel, wie Diethylenglycol, Triethylenglykol, Butyldiglykol und/oder Glycerin, können zusätzlich die Funktion eines Lösungsmittels ausüben. Als weitere geeignete Feuchthaltemittel können genannt werden: Ethylenoxid-Addukte mehrwertiger Alkohole, höherwertige Alkohole, wie vierwertiger Alkohol, insbesondere Pentaerythrit, fünfwertige Alkohole (Pentite), insbesondere Arabit, Adonit und Xylit, sowie auch sechswertige Alkohole (Hexite), insbesondere Sorbit, Mannit und Dulcit. Von besonderem Vorteil als Feuchthaltemittel sind Harnstoff und/oder Harnstoffderivate, wobei unter Harnstoffderivaten Dimethylharnstoff besonders bevorzugt wird. Der wünschenswerte Feuchthalteeffekt wird vorzugsweise in einem Rahmen von etwa 3 bis 35 Gew.-%, insbesondere etwa 5 bis 30 Gew.-% Feuchthaltemittel in der Ink Jet-Tinte erhalten, ganz besonders bevorzugt in dem Rahmen von etwa 5 bis 20 Gew.-%. Eine zu kleine Menge würde nicht hinreichend wirksam sein, während ein Überschreiten des Wertes von 35 Gew.-% dazu führen würde, dass die Tinte eine zu hohe Viskosität erhielte. Für den Fall, dass als Feuchthaltemittel Harnstoff und/oder ein Harnstoffderivat herangezogen wird, befinden sich diese in der erfindungsgemäßen Ink Jet-Tinte vorzugsweise in einer Menge von etwa 3 bis 10 Gew.-%, insbesondere etwa 3 bis 7 Gew.-%.

Die Art der jeweils in der erfindungsgemäßen Tinte enthaltenen Farbstoffe ist nicht limitiert. Es handelt sich um die üblicherweise in Ink Jet-Tinten eingesetzten gelben Farbstoffe, Magenta-Farbstoffe sowie Cyan-Farbstoffe. Es werden bevorzugt bei den gelben Farbstoffen Direct Yellow 143 und Acid Yellow 23, bei den Magenta-Farbstoffen Acid Red 52, Reactive Red 23 und Acid Red 27 sowie bei den Cyan-Farbstoffen Acid Blue 9 und Direct Blue 199. In Einzelfällen kann es auch von Vorteil sein, zusätzlich zu den Farbstoffen feinstteilige Pigmente einzusetzen, insbesondere einer Teilchengröße von weniger als 500 nm. Die Farbstoffe sind in der erfindungsgemäßen Ink Jet-Tinte in üblichen Mengenrahmen enthalten, insbesondere in einer Menge von etwa 1 bis 5 Gew.-% und ganz besonders von etwa 2 bis 4,5 Gew.-%.

Um die erfindungsgemäß gestellte Aufgabe besonders optimal zu lösen, ist es von Vorteil den pH-Wert geeignet einzustellen. Vorzugsweise liegt dieser zwischen 5 und 10, insbesondere zwischen 6 bis 9. Das bedeutet insbesondere, dass die vorstehend angesprochenen Probleme der Korrosivität behoben sind und die Einbindung von Korrosionsinhibitoren nicht erforderlich ist. Zur Einstellung des pH-Wertes werden insbesondere primäre, sekundäre und/oder tertiäre Amine herangezogen, wobei das Alkanolamin, insbesondere Triethanolamin, bevorzugt ist. Zur Einstellung des pH-Wertes können beispielsweise auch Natronlauge, beliebige Säuren, Puffer, wie Ammoniumacetat und dergl. herangezogen werden.

Dem Fachmann ist es möglich, die erfindungsgemäße Ink Jet-Tinte dadurch zu verbessern, indem weitere übliche Additive, je nach Anforderungsprofil, herangezogen werden. Dabei kann es sich beispielsweise um Stabilisatoren und/oder Konservierungsmittel handeln. Zu den Stabilisatoren zählt beispielsweise Ethylendiamintetraessigsäure (EDTA). Als besonders vorteilhafte Konservierungsmittel können solche angegeben werden, die den folgenden Gruppen zuzuordnen sind: Thiazol- und Isothiazol-Verbindungen.

In Einzelfällen kann es für den angestrebten Erfolg auch günstig sein, dass die wässrige Ink Jet-Tinte ein Verflüchtigungshilfsmittel enthält. Dies ist eine leicht verdampfbare Flüssigkeit, die vorzugsweise mit Wasser mischbar ist und unter das fakultative Merkmale "weitere Additive" fällt. Beispielsweise kann es sich um niedere Alkohole handeln, insbesondere solche mit etwa 1 bis 4 Kohlenstoffatomen. Bevorzugt sind Methanol, Ethanol, Propanol, Isopropanol, Butanol, Pentanol und deren Isomere. Besonders vorteilhaft ist Isopropanol. Die hiermit verbundenen Eigenschaften zeigen sich insbesondere darin, dass die Ink Jet-Tinte auf dem Papier schneller trocknet und die Schmierfestigkeit verbessert wird. Bei Einsatz des Verflüchtigungshilfsmittels wird der Fachmann problemlos die geeignete Konzentration einstellen. Allerdings ist im allgemeinen ein Überschreiten einer Obergrenze von etwa 10 bis 12 Gew.-% nicht zu empfehlen. Dies kann beim Ausstoß der Tinte aus den Düsen zur Bildung von unerwünschten Satellitentropfen führen und damit zu einer Verminderung der Druckqualität, insbesondere der Randschärfe und des Druckkontrastes.

Vorstehend wurde auch auf eine Ink Jet-Tinte eingegangen, die in einer Kartusche bzw. einer Patrone enthalten ist, die zusätzlich einen Schwamm enthält. Dieser erfüllt unter anderem auch eine Speicherfunktion. Es hat sich in der Praxis gezeigt, dass die erfindungsgemäßen Ink Jet-Tinten insbesondere dann von Vorteil sind und die gestellte Aufgabe lösen, wenn dieser Schwamm nicht aus einem beliebigen Material besteht, sondern insbesondere aus einem Material auf der Basis von Polyurethan, Polyester und/oder eines Melaminharzes. Ein derartiges Schwammmaterial führt dazu, dass die gestellte Aufgabe in wünschenswertem Umfange gelöst wird. Es hat sich auch gezeigt, dass die erfindungsgemäßen Ink Jet-Tinten eine wünschenswerte Stabilität der Oberflächenspannung zeigen. Gleiches gilt für die Viskosität der Tinte. Die mit der erfindungsgemäßen Tinte erzielbaren Vorteile sind auch darin zu sehen, dass sie zu einem verbesserten Fluss aus refillten Kartuschen bzw. Patronen führen und beim Ausdruck Streifenbildung verhindern. Ferner hat es sich gezeigt, dass dann, wenn die Kartuschen bzw. Patronen nach Benutzung neu gefüllt werden, die eingefüllte Tinte eine optimale Kompatibilität mit der Resttinte zeigt. Schlimmstenfalls kann der Farbstoff ausfallen. Auf jeden Fall ist es ohne weiteres ersichtlich, dass die wässrige Ink Jet-Tinte gemäß der Erfindung ihre Verwirklichung findet in einer Patrone mit Schwamm, wobei sie in dem Schwamm enthalten ist. Somit verwirklicht sich die Erfindung nicht nur in der wässrigen Ink Jet-Tinte sowie deren Verwendung in einer einen Schwamm enthaltenden Patrone, wobei der Schwamm insbesondere auf Basis von Polyurethan, Polyester und/oder eines Melaminharzes beruht, sondern auch in der bezeichneten Patrone mit einem Schwamm und darin enthaltener Ink Jet-Tinte.

Die Erfindung wird nachfolgend anhand von verschiedenen Rezepturen, aus denen die qualitative und quantitative Zusammensetzung hervorgeht, noch näher erläutert werden:

### Beispiel 1

| Position | Rohstoffbezeichnung | Menge (Gew.-Teile) |
|---|---|---|
| 1. | entmineralisiertes Wasser | 52,65 |
| 2. | Glykole (Diethylenglykol und/oder Butyldiglykol) | 10,0 - 20,0 |
| 3. | Glycerin (99,5%) | 3,0 - 9,0 |
| 4. | Harnstoff | 2,0 - 10,0 |
| 5. | Tensid B acetyliertes Glykol (Surfynol® 104 PA) | 0,15 |
| 6. | Tensid B (Surfynol® 465) | 0,50 |
| 7. | Tensid B (Surfynol® 440) | 0,10 |
| 8. | Tensid A (Silwet L 7607) | 0,15 |
| 9. | Triethanolamin | 0,10 |
| 10. | EDTA | 0,05 |
| 11. | Konservierungsmittel (Acticid LA) (Biozid) | 0,10 |
| 12. | gelber Farbstoff (Direct Yellow 132) | 0,2 - 2,0 |
| 13. | gelber Farbstoff (Acid Yellow 23) | 10,0 - 20,0 |

Die vorstehenden Positionen 1 bis 14 werden bei der Herstellung der erfindungsgemäßen Ink Jet-Tinte in der oben genannten Reihenfolge zusammengegeben und etwa 2 Stunden gerührt. Danach wird filtriert. Die Ink Jet-Tinte ist unmittelbar einsetzbar.

### Beispiel 2

| Position | Rohstoffbezeichnung | Menge (Gew.-Teile) |
|---|---|---|
| 1. | entmineralisiertes Wasser | 31,26 |
| 2. | Glykole (Diethylenglykol und/oder Butyldiglykol) | 10,0 - 20,0 |
| 3. | Glycerin (99,5%) | 3,0 - 9,0 |
| 4. | Harnstoff | 2,0 - 10,0 |
| 5. | Tensid B acetyliertes Glykol (Surfynol® 104 PA) | 0,15 |
| 6. | Tensid B (Surfynol® 465) | 0,50 |
| 7. | Tensid B (Surfynol® 440) | 0,10 |
| 8. | Tensid A (Silwet L 7607) | 0,15 |
| 9. | Triethanolamin | 0,04 |
| 10. | EDTA | 0,20 |
| 11. | Konservierungsmittel (Acticid LA) (Biozid) | 0,10 |
| 12. | blauer Farbstoff (Acid Blue 9) | 0,5 - 2,0 |
| 13. | blauer Farbstoff (Direct Blue 196) | 30,0 - 40,0 |

Die vorstehenden Positionen 1 bis 14 werden bei der Herstellung der erfindungsgemäßen Ink Jet-Tinte in der oben genannten Reihenfolge zusammengegeben und etwa 2 Stunden gerührt. Anschließend wird filtriert.

### Beispiel 3

| Position | Rohstoffbezeichnung | Menge (Gew.-Teile) |
|---|---|---|
| 1. | entmineralisiertes Wasser | 31,26 |
| 2. | Glykole (Diethylenglykol und/oder Butyldiglykol) | 10,0 - 20,0 |
| 3. | Glycerin (99,5%) | 3,0 - 9,0 |
| 4. | Harnstoff | 2,0 - 10,0 |
| 5. | Tensid B acetyliertes Glykol (Surfynol® 104 PA) | 0,15 |
| 6. | Tensid B (Surfynol® 465) | 0,50 |
| 7. | Tensid B (Surfynol® 440) | 0,10 |
| 8. | Tensid A (Silwet L 7607) | 0,15 |
| 9. | Triethanolamin | 0,04 |
| 10. | EDTA | 0,20 |
| 11. | Konservierungsmittel (Acticid LA) (Biozid) | 0,10 |
| 12. | roter Farbstoff (Acid Red 52) | 0,1 - 0,8 |
| 13. | roter Farbstoff (Acid Red 27) | 20,0 - 40,0 |

Die vorstehenden Positionen 1 bis 14 werden bei der Herstellung der erfindungsgemäßen Ink Jet-Tinte in der oben genannten Reihenfolge zusammengegeben und etwa 2 Stunden gerührt. Anschließend wird filtriert.

Es ist dem Fachmann ohne weiteres ersichtlich, dass die Zusammenstellung die quantitative und qualitative Stoffbezeichnung Zusammenstellung nach den Beispielen 1 bis 3 lediglich eine Richtlinie darstellen und nicht beschränkend sein soll.

## Patentansprüche

1. Patrone für den Ink Jet-Druck, in der sich eine wässrige Ink Jet-Tinte befindet, die einen gelben Farbstoff, einen Magenta-Farbstoff oder einen Cyan-Farbstoff, ein organisches Lösungsmittel und Tenside sowie gegebenenfalls weitere Additive enthält, **dadurch gekennzeichnet, dass** die Ink Jet-Tinte mindestens zwei Tenside unterschiedlichen HLB-Wertes sowie 1 bis 10 Gew.-% Harnstoff und/oder eines Harnstoffderivat enthält, wobei mindestens ein Tensid A einen HLB-Wert zwischen 15 und 25 und mindestens ein Tensid B einen HLB-Wert von 1 bis 14 aufweist, das Tensid A in einer Konzentration von 0,01 bis 1,5 Gew.-% und das Tensid B in einer Konzentration von 0,01 bis 1 Gew.-% vorliegen, die Ink Jet-Tinte einen pH-Wert von 5 bis 10 sowie bei einer Temperatur von 20°C eine dynamische Oberflächenspannung von weniger als 35 mN/m aufweist und die Patrone einen Schwamm zur Aufnahme der Ink Jet-Tinte enthält.

2. Patrone nach Anspruch 1, **dadurch gekennzeichnet, dass** die Ink Jet-Tinte 3 bis 7 Gew.-% Harnstoff und/oder eines Hamstoffderivats enthält.

3. Patrone nach Anspruch 1 oder 2, **dadurch gekennzeichnet, dass** der HLB-Wert des Tensids B zwischen 4 und 13 liegt.

4. Patrone nach einem der Ansprüche 1 bis 3, **dadurch gekennzeichnet, dass** die Ink Jet-Tinte bei einer Temperatur von 20°C eine dynamische Oberflächenspannung von 20 bis 30 mN/m aufweist.

5. Patrone nach einem der Ansprüche 1 bis 4, **dadurch gekennzeichnet, dass** das Tensid A als Polyalkylenoxid-modifiziertes Polydimethylsiloxan vorliegt.

6. Patrone nach mindestens einem der vorhergehenden Ansprüche, **dadurch gekennzeichnet, dass** die Ink Jet-Tinte das Tensid A in einer Konzentration von 0,05 bis 0,7 Gew.-% und/oder das Tensid B in einer Konzentration von 0,01 bis 1 Gew.-% enthält.

7. Patrone nach mindestens einem der vorhergehenden Ansprüche, **dadurch gekennzeichnet, dass** die Ink Jet-Tinte ein Feuchthaltemittel in Form von Diethylenglykol, Butyldiglykol und/oder Glycerin enthält.

8. Patrone nach mindestens einem der vorhergehenden Ansprüche, **dadurch gekennzeichnet, dass** die Ink Jet-Tinte einen pH-Wert von 6 bis 9 aufweist.

9. Patrone nach Anspruch 8, **dadurch gekennzeichnet, dass** die Ink Jet-Tinte zur Einstellung des pH-Wertes ein primäres, sekundäres und/oder tertiäres Amin enthält, insbesondere ein Alkanolamin.

10. Patrone nach Anspruch 9, **dadurch gekennzeichnet, dass** das Alkanolamin Triethanolamin ist.

11. Patrone nach mindestens einem der vorhergehenden Ansprüche, **dadurch gekennzeichnet, dass** die Ink Jet-Tinte einen Stabilisator und/oder ein Konservierungsmittel enthält.

12. Patrone nach mindestens einem der vorhergehenden Ansprüche , **dadurch gekennzeichnet, dass** der Schwamm ein Material auf der Basis von Polyurethan, Polyester und/oder eines Melaminharzes darstellt.

## Claims

1. An ink-jet print cartridge containing an aqueous ink-jet ink comprising a yellow dyestuff, a magenta dyestuff or a cyan dyestuff, an organic solvent, surfactants and other additives if required, **characterised in that** the ink-jet ink contains at least two surfactants with different HLB values and 1 to 10 wt.% urea and/or a urea derivative, wherein at least one surfactant A has an HLB value between 15 and 25 and at least one surfactant B has an HLB value of 1 to 14, the surfactant A is present in a concentration of 0.01 to 1.5 wt.% and the surfactant B is present in a concentration of 0.01 to 1 wt.%, the ink-jet ink has a pH of 5 to 10 and a dynamic surface tension of less than 35 mN/m at a temperature of 20°C and the cartridge contains a sponge for holding the ink-jet ink.

2. A cartridge according to claim 1, **characterised in that** the ink-jet ink contains 3 to 7 wt.% urea and/or a urea derivative.

3. A cartridge according to claim 1 or claim 2, **characterised in that** the HLB value of the surfactant B is between 4 and 13.

4. A cartridge according to any of claims 1 to 3, **characterised in that** the ink-jet ink has a dynamic surface tension of 20 to 30 mN/m at a temperature of 20°C.

5. A cartridge according to any of claims 1 to 4, **characterised in that** the surfactant A is polyalkylene oxide-modified polydimethyl siloxane.

6. A cartridge according to at least one of the preceding claims, **characterised in that** the ink-jet ink contains the surfactant A in a concentration of 0.05 to 0.7 wt.% and/or the surfactant B in a concentration of 0.01 to 1 wt.%.

7. A cartridge according to at least one of the preceding claims, **characterised in that** the ink-jet ink contains a moisture-retaining means in the form of diethylene glycol, butyl diglycol and/or glycerol.

8. A cartridge according to at least one of the preceding claims, **characterised in that** the ink-jet ink has a pH of 6 to 9.

9. A cartridge according to claim 8, **characterised in that** the ink-jet ink contains a primary, secondary and/or tertiary amine, especially an alkanolamine for adjusting the pH.

10. A cartridge according to claim 9, **characterised in that** the alkanolamine is triethanolamine.

11. A cartridge according to at least one of the preceding claims, **characterised in that** the ink-jet ink contains a stabiliser and/or a preservative.

12. A cartridge according to at least one of the preceding claims, **characterised in that** the sponge material is based on polyurethane, polyester and/or a melamine resin.

## Revendications

1. Cartouche pour impression à jet d'encre, dans laquelle est contenue une encre aqueuse pour impression à jet d'encre contenant un colorant jaune, un colorant magenta ou un colorant cyan, un solvant organique et des agents tensio-actifs, ainsi que le cas échéant d'autres additifs, **caractérisée en ce que** l'encre pour impression à jet d'encre contient au moins deux agents tensio-actifs de différentes valeurs HLB ainsi que 1 à 10 % en poids d'urée et/ou d'un dérivé d'urée, au moins un agent tensio-actif A ayant une valeur HLB comprise entre 15 et 25, et au moins un agent tensio-actif B ayant une valeur HLB de 1 à 14, l'agent tensio-actif A étant présent à une concentration de 0,01 à 1,5 % en poids et l'agent tensio-actif B à une concentration de 0,01 à 1 % en poids, l'encre pour impression à jet d'encre ayant une valeur de pH de 5 à 10 ainsi que, à une température de 20°C, une tension superficielle dynamique de moins de 35 mN/m, et la cartouche contenant une éponge pour l'absorption de l'encre pour impression à jet d'encre.

2. Cartouche selon la revendication 1, **caractérisée en ce que** l'encre pour impression à jet d'encre contient 3 à 7 % en poids d'urée et/ou d'un dérivé d'urée.

3. Cartouche selon la revendication 1 ou 2, **caractérisée en ce que** la valeur HLB de l'agent tensio-actif B est comprise entre 4 et 13.

4. Cartouche selon l'une des revendications 1 à 3, **caractérisée en ce que**, à une température de 20 °C, l'encre pour impression à jet d'encre possède une tension superficielle dynamique de 20 à 30 mN/m.

5. Cartouche selon l'une des revendications 1 à 4, **caractérisée en ce que** l'agent tensio-actif A est présent à l'état de siloxane de polydiméthyle modifié par un oxyde de polyalkylène.

6. Cartouche selon l'une au moins des revendications précédentes, **caractérisée en ce que** l'encre pour impression à jet d'encre contient l'agent tensio-actif A à une concentration de 0,05 à 0,7 % en poids et/ou l'agent tensio-actif B à une concentration de 0,01 à 1 % en poids.

7. Cartouche selon l'une au moins des revendications précédentes, **caractérisée en ce que** l'encre pour impression à jet d'encre contient un agent de maintien d'humidité sous forme de diéthylèneglycol, de butyldiglycol et/ou de glycérine.

8. Cartouche selon l'une au moins des revendications précédentes, **caractérisée en ce que** l'encre pour impression à jet d'encre possède une valeur de pH de 6 à 9.

9. Cartouche selon la revendication 8, **caractérisée en ce que**, pour le réglage de la valeur de pH, l'encre pour impression à jet d'encre contient une amine primaire, secondaire et/ou tertiaire, notamment un amino-alcool.

10. Cartouche selon la revendication 9, **caractérisée en ce que** l'alcanolamine est de la triéthanolamine.

11. Cartouche selon l'une au moins des revendications précédentes, **caractérisée en ce que** l'encre pour impression à jet d'encre contient un stabilisateur et/ou un agent de conservation.

12. Cartouche selon l'une au moins des revendications précédentes, **caractérisée en ce que** l'éponge est constituée d'une matière à base de polyuréthanne, de polyester et/ou d'une résine de mélamine.
